# EUROPEAN PATENT APPLICATION

(11) **EP 1 850 605 A1**
(43) Date of publication of application: **31.10.2007**
(21) Application number: 07106783.9
(22) Date of filing: 24.04.2007
(51) Int. Cl.: H04Q 7/30, H04Q 7/38

(54) **Device for local routing of local traffic in a radio communication network by detection of data corresponding to copies of uplink frames in copies of downlink frames**

(30) Priority: 28.04.2006 FR 0651524
(71) Applicant: Alcatel Lucent, 75008 Paris (FR)
(72) Inventor: Farineau, Jean, 92300, LEVALLOIS PERRET (FR); Poletti, Claude, 92707, COLOMBES CEDEX (FR); Aime, Christelle, 78170, LA CELLE SAINT CLOUD (FR); Cartigny, Marc, 78360, MONTESSON (FR)
(74) Representative: Hedarchet, Stéphane

(57) **Abstract**

A device (D) is dedicated to routing local traffic between communication terminals (T1, T2) supporting the same type of codec, for a traffic router (R1) connected, via a transmission network portion, to a radio communication network comprising an MSC. This device (D) comprises processing means (MT) responsible, in case of setting up an uplink first traffic channel between a calling terminal (T1) and the MSC and a downlink second traffic channel between said MSC and a called terminal (T2) i) for storing for a selected period uplink and downlink copies of successive traffic frames, respectively carried on the uplink first traffic channel and on at least one downlink traffic channel, then ii) detecting among the stored downlink copies those including data related to stored uplink copies, and iii) in case of detection in a selected time interval of a selected number of such downlink copies, instructing the traffic router (R1) to insert locally into frames going to the downlink second channel the useful data contained in the traffic frames carried on the uplink first traffic channel subsequent to the local routing instruction, and to suspend the transmission to the MSC of at least the useful data fields relating to the call considered.

## Description

The invention concerns satellite and terrestrial radio communication networks and more particularly local routing of traffic between communication terminals connected to such networks via the same base station controller (or radio network controller).

Here "satellite and terrestrial radio communication networks" means communication networks such as GSM/GPRS or UMTS networks, in which the traffic exchanged by communication terminals must be transmitted to a call switch (or MSC, standing for "Mobile-services Switching Center"), responsible for managing calls set up in a given geographical sector, via a communication satellite and/or a terrestrial network, coupled to two transmission equipments, themselves each connected to a traffic router. The two traffic routers and the two transmission equipments may be installed at the level of the interface of the network called the "A-bis" interface, that is to say between certain of its base stations and an associated base station controller, or at the interface called the "A-ter" interface, that is to say between a base station controller and a transcoder coupled to the associated call switch and responsible for converting compressed voice into digitized speech at 64 kbps (kilobits per second), or at the interface called the "A" interface, that is to say between said transcoder and said call switch.

Moreover, "remote site" refers hereinafter to a set of equipments situated at the end of a transmission link, in a geographical area that is generally far away from the remainder of the network, and comprising at least one or more base stations (BTS) and one or more traffic routers.

Hereinafter "local call" designates a communication stream set up in circuit mode or in packet mode between two communication terminals situated within the geographical area identified as the "remote site". "Remote call" designates, as opposed to a local call, a communication stream set up in circuit mode or in packet mode between a communication terminal, situated within the geographical area identified as the "remote site", and a communication terminal situated outside the geographical area identified as the "remote site".

Here "communication terminal" means mobile communication terminals, fixed communication terminals, data servers or communication servers.

Moreover, it must be remembered that a frame called a TRAU comprises two essential fields, one field dedicated to the control bits and one field dedicated to the useful (or "payload") data. The control bits are indispensable to the normal operation of the network as a whole. Their number generally varies as a function of the type of frame ("full rate voice", "half rate voice", "GPRS data", etc.). Moreover, the size of a TRAU frame generally being 160 bits or 320 bits, the number of bits dedicated to the useful data therefore also varies.

As the person skilled in the art knows, in the networks cited above, when a call is set up between two communication terminals connected to the same remote site, all the traffic that they exchange must pass in transit through a call switch (or MSC). In other words, the traffic must go from the remote site to the MSC, then from the MSC to the remote site. This transmission mode therefore introduces a transmission delay that may constitute a problem for the users, especially if the remote site is coupled to the MSC via a satellite link. Moreover, the fact of making the same traffic pass in transit over the same satellite link twice (in a round trip mode) monopolizes transmission resources, which are limited.

At least three solutions have been proposed that attempt to improve on the situation. A first solution consists in using call switches (MSC) transferred to the downstream side of the transmission equipments, which amounts to installing an MSC at the level of each remote site. However, this solution being very costly, in particular because it imposes the processing of complex protocol layers on a large number of channels, it proves unacceptable outside of situations in which the coverages of the remote sites, to which the call switches have been transferred, serve a very large number of network subscribers, typically at least 400 000.

A second solution consists in installing a dedicated switch in each remote site. However, on the one hand, this imposes filtering, transposing and interpreting the signaling, which is complex and costly, and, on the other hand, it breaks up the reference architecture of the network in which only the MSCs are responsible for routing calls.

A third solution, described in the patent document FR 0451012, consists in routing locally the traffic exchanged between two communication terminals connected to the same remote site in case of detection at the level of the traffic router associated with the remote site of a correlation between certain data carried on an uplink channel dedicated to a new uplink call and data carried by all the downlink channels following that new uplink call.

This third solution necessitates the use of complex correlation algorithms. Moreover, the reliability of the local processing is not guaranteed in all cases. In fact, a local call may in certain cases not be processed as such, and in extreme cases a remote call may be considered as a local call, thereby causing the loss of said remote call.

No known solution being entirely satisfactory, an object of the invention is therefore to improve on the situation when calls are processed by the network in TFO ("Tandem Free Operation") mode, that is to say when the transcoders process the call in transparent mode, without reconversion of the compressed voice into digitized speech at 64 kbps. It must be remembered that the TFO mode is used for mobile terminal to mobile terminal calls whenever possible, in order to avoid degrading voice quality by double transcoding. For the TFO mode to be applicable, the same codec must be supported by each of the two mobile terminals concerned.

To this end it proposes a device dedicated to local routing of local traffic between communication terminals supporting the same type of codec (coder/decoder), possibly mobile terminals, for a traffic router connected to a transmission network portion of a radio communication network (as defined in the introduction).

This routing device is characterized in that it comprises processing means responsible, in case of setting up an uplink first traffic channel between a calling terminal and a call switch (or MSC) and a downlink second traffic channel between that MSC and a terminal called by that calling terminal:
- for storing for a selected period uplink and downlink copies of successive traffic frames, respectively carried on the uplink first traffic channel and on at least one downlink traffic channel, then
- for detecting among the stored downlink copies those including data related to stored uplink copies, and
- in case of detection in a selected time interval of a selected number of such downlink copies, for instructing their traffic router to insert locally into frames going to the downlink second channel the useful data contained in the traffic frames carried on the uplink first traffic channel subsequent to the local routing instruction, and suspending the transmission to the MSC of at least the useful data fields relating to the call considered.

The device according to the invention may have other features and in particular, separately or in combination:
- its processing means may be responsible for effecting their detection by comparing with each other the useful data contained in the useful data fields of the stored uplink and downlink copies and, in case of detection in a selected time interval of a selected number of uplink copies including useful data fields identical to those of stored downlink copies, instructing their traffic router to insert locally in frames going to the downlink second channel the useful data contained in the traffic frames carried on the uplink first traffic channel subsequent to the local routing instruction, and suspending the transmission to the MSC of at least the useful data fields relating to the call considered;
- alternatively, its processing means may be responsible for instructing the traffic router to integrate into at least certain of the uplink traffic frames signature data representing the corresponding uplink copies and to detect the downlink copies by searching their data for signature data representing stored uplink copies and, in case of detection in a selected time interval of a selected number of downlink copies including signature data representing stored uplink copies, to instruct their traffic router to insert locally into frames going to the downlink second channel the useful data contained in the traffic frames carried on the uplink first traffic channel subsequent to the local routing instruction and to suspend the transmission to the MSC of at least the useful data fields relating to the call considered;
   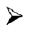 its processing means may be responsible for instructing their traffic router to integrate the signature data into the uplink traffic frames by substituting it for non-useful data contained in their useful data field and adding it to the useful data contained in their useful data field;
   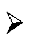 its processing means may be responsible for instructing their traffic router to integrate signature data into all types of traffic frames during the detection period;
   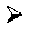 alternatively, its processing means may be responsible for instructing their traffic router to integrate signature data into voice traffic frames (i.e. frames containing voice);
   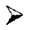 alternatively, its processing means may be responsible for instructing their traffic router to integrate signature data into the silence or invalid traffic frames;
- it may comprise frame compression/decompression means responsible for implementing a frame control bit compression/decompression technique; in this case the processing means may be responsible for:
   - storing for a selected period an uplink copy of each traffic frame carried on the uplink first traffic channel subsequent to the routing instruction, then
   - instructing the frame compression/decompression means to extract from the copied traffic frame the control bits that it contains in order to group at least certain of the extracted control bits in a compressed frame intended for the MSC, then
   - in case of reconstitution of a downlink frame by the frame compression/decompression means by means of decompression, instructing the traffic router to insert in that reconstituted frame the useful data from the corresponding stored uplink copy in order to constitute a traffic frame in which the control bits are those of the reconstituted downlink frame and the useful data field comprises the useful data from the uplink copy;
- the frame compression/decompression means may be responsible for compressing the extracted control bits by elimination of redundant or non-significant bits, and then grouping the remaining control bits in a compressed frame, and decompressing each compressed downlink frame, returning the significant control bits to their original location, so as to deliver reconstituted downlink frames;
- in a first variant, the processing means may be responsible for storing for a selected period each traffic frame carried on the uplink first traffic channel subsequent to the local routing instruction and to instruct the traffic router to route locally and directly each stored frame to the downlink second channel once its selected storage period has ended, without transmitting it beforehand to the MSC;
- the processing means may be responsible for inserting a time marker in at least certain of said traffic frames carried by the uplink first traffic channel and comparing the reception time period of a traffic frame carried on the downlink second traffic channel to the time period represented by the time marker that it contains in order to determine the complete round trip time of the traffic frame and then selecting the uplink copy storage period as a function of the complete round trip time that has been determined;
- in a second variant, the processing may be responsible for instructing their traffic router to route locally and directly to the downlink second channel the traffic frames carried on the uplink first traffic channel subsequent to the local routing instruction, without transmitting them beforehand to the MSC;
- the processing means may be responsible for processing only traffic frames containing speech data;
- it may comprise filtering means responsible for analyzing signaling messages representing traffic frames carried on the downlink traffic channels to determine from among those downlink traffic channels those concerning a new call or a call transfer (or "handover") procedure, and then designating the selected downlink traffic channels to the processing means; in this case, the processing means may be responsible for storing temporarily only downlink copies of traffic frames carried by the selected downlink traffic channels, with a view to comparing them to the uplink copies;
- alternatively, the filtering means may be responsible, if the traffic frames include a communication identifier for a calling terminal or a called terminal, for analyzing the headers of the traffic frames carried on the downlink traffic channels to select each downlink traffic channel carrying frames including a communication identifier identical to that contained in the stored uplink copies, and then designating the selected downlink traffic channels to the processing means; in this case the processing means may be responsible for storing temporarily only downlink copies of traffic frames carried by the selected downlink traffic channels, with a view to comparing them to the corresponding uplink copies.

The invention also proposes a traffic router for a radio communication network including a transmission network portion and a call switch, equipped with a local routing device of the type described hereinabove.

The invention is particularly well adapted, although not exclusively so, to mobile communication networks, such as cellular networks of TDMA or CDMA type, for example, and in particular GSM, GPRS, EDGE, UMTS and WIFI networks. The invention is equally adapted to satellite communication networks, using GEO, MEO or LEO type satellites. The invention is equally adapted to terrestrial communication networks, for example using cable, optical fiber or radio links, and in particular communication networks of Internet or ATM type, adapted to telephony over IP, for example.

The invention is particularly beneficial, although this is not obligatory, in networks that use one or more satellite relays over a portion of their links. Moreover, the invention applies to any type of transmitted stream: voice, data, video, fax, radar, whether those streams are transmitted raw or compressed.

Other features and advantages of the invention will become apparent on reading the following detailed description and examining the appended drawings, in which:
- figure 1 illustrates diagrammatically one example of a radio communication network with satellite relay equipped with a routing device according to the invention, during a detection phase,
- figure 2 illustrates diagrammatically and functionally one example of a traffic router equipped with one embodiment of a routing device according to the invention,
- figure 3 illustrates diagrammatically and functionally one example of a traffic router coupled to a call switch (MSC), and
- figure 4 illustrates diagrammatically the figure 1 example of a radio communication network with satellite relay following detection.

The appended drawings constitute part of the description of the invention as well as contributing to the definition of the invention, if necessary.

An object of the invention is to enable local routing of local traffic in a radio communication network processing calls in TFO ("Tandem Free Operation") mode and using at least one terrestrial or satellite transmission network portion coupled, on the one hand, to a call switch (or MSC) and, on the other hand, to at least one remote site.

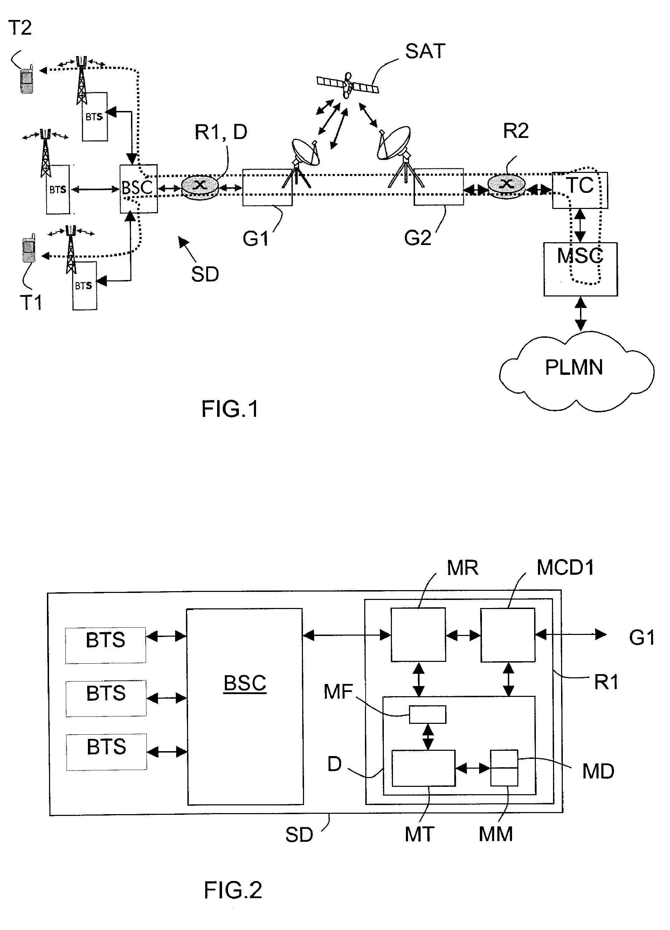

Figures 1 and 2 are referred to first to describe one example of application of the invention to a radio (communication) network with satellite relay. It is important to note that such a network may include one or more local routing devices D according to the invention.

It is considered hereinafter that the radio network is of GSM/GPRS type. However, the invention is not limited to that type of network. It concerns all terrestrial radio networks, including those with satellite relay(s) (called hybrid networks), and in particular those of EDGE, UMTS or WIFI type, and generally radio communication networks such as those of TDMA or CDMA type. It also concerns satellite communication networks and Internet and ATM type communication networks.

Moreover, hereinafter "mobile communication terminal" means any mobile communication equipment capable of exchanging data in the form of radio signals with a base station BTS. It may therefore be a question, for example, of user equipments, such as mobile (or cellular) telephones or laptop computers or personal digital assistants (PDA) equipped with a radio communication equipment. However, the invention concerns equally communications between fixed terminals (or stations) communicating via mobile communication networks (in particular GSM, EDGE, UMTS, WIFI networks) or via fixed communication networks (fixed telephone networks, Internet or ATM networks, for example adapted to telephony over IP). The concept of mobility is here in no way limiting on the invention, and is merely intended to illustrate one example of application of the invention to a radio network of cellular type.

It is considered hereinafter that the mobile communication terminals are mobile telephones Ti.

Like that illustrated in figure 1, a GSM/GPRS network with satellite relay comprises, broadly speaking but nevertheless in sufficient detail for understanding the invention:
- base stations BTS (standing for "Base Transceiver Station") including radio equipments providing the connection with mobile communication terminals,
- one or more base station controllers BSC to which one or more base stations BTS are connected and responsible for management of radio resources,
- at least one satellite link including a communication satellite SAT,
- first and second satellite communication equipments G1 and G2, generally taking the form of a gateway and responsible for transmitting traffic and signaling via the satellite SAT,
- at least one call switch MSC (standing for "Mobile-services Switching Center") responsible for managing the calls set up in the geographical sector covered by the base stations BTS coupled to the remote site(s) to which it is coupled, via the satellite SAT, and connected to the core network (here of PLMN type, standing for "Public Land Mobile Network") and preferably (and as shown) to a transcoder TC responsible for converting compressed voice into digitized speech at 64 kbps (kilobits per second) and vice versa, and
- first and second traffic routers R1 and R2 respectively coupled to the first and second satellite communication equipments G1 and G2 and responsible for routing the traffic that they receive as a function of their destination(s). In the example illustrated, the satellite link is installed at the level of the A-ter interface of the network, that is to say between the base station controller BSC and the transcoder TC. Consequently, the first traffic router R1 is connected to the base station controller BSC. However, the satellite link may be installed at the level of the A-bis interface of the network, that is to say between the base stations BTS and the associated base station controller BSC, or at the A interface, that is to say between the transcoder TC and the call switch MSC. These E1 interfaces conform to the G.703 standard in so far as the physical layer is concerned and the G.704 standard in so far as framing (generally at 2 048 kbps) is concerned. Moreover, it will be noted that the A-bis and A-ter interfaces are generally the subject of specific proprietary requirements as a function of their manufacturer.

Hereinafter, "remote site" refers to a set of equipments comprising at least one traffic router R1 and at least one base station BTS. In figures 1, 2 and 4 the remote site SD further comprises, by way of example, a base station controller BSC.

In such a network, data is exchanged over the A-bis interface by means of multiple signaling channels (at least one channel per base station BTS), each occupying either one byte per frame (in the case of 64 kbps channels) or two bits per frame (in the case of 16 kbps channels).

When the data exchanged is traffic data, the channels used are traffic channels TCH. Each TCH channel then occupies either two bits per G.704 frame (in the case of a 16 kbps channel of "Full Rate" (or FR) type), or one bit per frame (in the case of an 8 kbps channel of "Half Rate" (or HR) type). In the case of a voice call, a TCH channel is used in each direction, of exactly the same size and position within each incoming or outgoing frame E1 at a given physical port.

Note that a similar scheme is applied for the traffic channels at the A-ter interface. There are fewer signaling channels, however, because the volume of signaling exchanged at the level of the A-ter interface is much lower than at the A-bis interface.

The invention comes into play once a new call has been set up between a first (calling) mobile telephone T1 and a second (called) mobile telephone T2. The main (conventional) steps for setting up a new call in a network with satellite relay are described hereinafter.

The user of the first mobile telephone T1 enters the number of the second mobile telephone T2. An exchange of signaling messages is then effected between the first mobile telephone T1 and the call switch MSC in order to characterize the call, and in particular the number of the called party T2. The call switch MSC then uses its subscriber database to determine the location of the called party T2. As shown here, the called party T2 is considered to be a subscriber of the network situated in the geographical sector managed by the call switch MSC.

An exchange of signaling messages is then effected between the call switch MSC and the second mobile telephone T2 in order to trip the ringer of the latter. An uplink first traffic channel CM1 and a first downlink traffic channel CD1 are set up between the first mobile telephone T1 and the call switch MSC and a second uplink traffic channel CM2 and a downlink second traffic channel CD2 are then set up between the second mobile telephone T2 and the call switch MSC, which constitutes four circuits in total (two uplink and two downlink).

If the user of the second mobile telephone T2 picks up, the call set-up procedure terminates and the four circuits are used throughout the duration of the call to convey voice (here compressed). The signaling present during the call at the level of the A-bis interface then consists essentially in feeding measurements from the first and second mobile telephones T1 and T2 to the controller BSC, which measurements are used in particular to decide whether to change cell during the call. As soon as one of the two users hangs up, the four circuits are freed.

Each of the four circuits uses a capacity of 8 kbps or 16 kbps according to the type of voice coding used, half rate or full rate. Consequently, a local call between two mobile telephones uses a capacity of 32 kbps or 64 kbps on the satellite line G1, SAT, G2. In the presence of a large number of local calls, the total capacity required at the level of the satellite link may exceed the total capacities of the satellite link. Furthermore, the cost of leasing satellite capacity is almost unacceptable for this type of application, where the average revenue per subscriber is generally low.

An object of the invention is therefore to solve these problems by proposing a local routing device D intended to be installed in each first router R1, or connected to it. Such a device D is shown diagrammatically and by way of nonlimiting example in figure 2.

This device D is intended to enable local routing of at least a portion of the local traffic (that is to say the local calls) and in particular of the useful (or "payload") data contained in the traffic frames, without this portion passing through the call switch MSC via the satellite SAT, so as to minimize the satellite capacities used.

A device D according to the invention comes into play at the first traffic router R1 each time that first and second uplink traffic channels CM1 and CM2 and first and downlink second traffic channels CD1 and CD2 have just been set up between first and second mobile telephones T1 and T2, supporting the same type of codec and connected to the same remote site SD, and the call switch MSC, using the mechanism described hereinabove.

The device D comprises at least one processing module MT coupled to the routing module MR of the first router R1 in order to observe the traffic frames that reach it and to initiate a detection phase each time that a circuit goes from the static state (invariant bits on the physical channel concerned) to the active state.

As soon as the above condition applies, the processing module MT effects uplink and downlink copies of the successive traffic frames that are carried during a selected period respectively on the uplink first traffic channel CM1 and on at least one downlink traffic channel. The processing module MT in fact does not know at the beginning of the detection phase which is the downlink second traffic channel CD2 transporting the data frames between the call switch MSC and the called mobile telephone T2.

The processing module MT stores these copies in storage means as and when they are produced. For example, it stores the uplink copies in a first memory MM and the downlink copies in a second memory MD. Each memory MM, MD is subdivided into subportions each dedicated to one of the uplink or downlink traffic channels.

These memories MM and MD may form part either of the processing module MT or of the device D, as is the case in the figure 2 example. Such memories MM and MD may be buffer memories (or "buffers"), for example.

As soon as the processing module MT has stored uplink and downlink copies available, it detects among the stored downlink copies those that include data having a relationship with stored uplink copies corresponding to the uplink first traffic channel CM1. In reality, a plurality of new calls is established in relatively short time periods, and so the processing module MT must effect its detection for each newly active uplink channel.

Each time in a selected time interval the processing module MT detects a selected number of downlink copies that include data related to stored uplink copies corresponding to the uplink first traffic channel CM1, it sends a routing instruction to the traffic router R1, more precisely to its routing module MR. This instruction terminates the detection phase for the uplink first traffic channel CM1 considered.

The number of downlink copies that must be detected for the same channel is made equal to 50, for example, which represents one second of traffic (a TRAU frame corresponds to 20 ms of traffic).

The routing instruction requires the traffic router R1 to insert locally into the frames going to the downlink second traffic channel CD2 discovered the useful (or payload) data that is contained in the traffic frames that are carried on the uplink first traffic channel CM1 subsequent to the routing instruction. This local insertion (or routing) is then effected without the useful data of the traffic frames being transmitted to the call switch MSC via the satellite link SAT.

To summarize, throughout the (selected) duration of a detection phase, the traffic frames carried by the uplink first traffic channel CM1 pass conventionally in transit through the call switch MSC, via the satellite link, and then take the downlink second traffic channel CD2, also via the satellite link, as is indicated by the dotted line in figure 1. Then, in case of successful detection, the useful data contained in the traffic frames carried by the uplink first traffic channel CM1 is routed locally by the traffic router R1 on the instruction of the device D without passing in transit through the call switch MSC.

The detection of data effected by the processing module MT may be carried out in at least two ways.

For example, the processing module MT may effect its detection by comparing with each other the useful data that is contained in the useful (payload) data fields of the stored uplink and downlink copies. More precisely, the processing module MT compares the useful data that is contained in the downlink copies corresponding to new active downlink channels to each uplink copy corresponding to a first (newly active) uplink traffic channel.

In case of detection in a selected time interval of a selected number of uplink copies including useful data fields identical to those of the stored downlink copies, the processing module MT instructs its traffic router R1, more precisely its routing module MR, to insert locally into frames going to the downlink second channel CD2 the useful data that is contained in the traffic frames carried on the uplink first traffic channel CM1 subsequent to the local routing instruction and to suspend transmission to the MSC of at least the useful data fields relating to the call concerned.

In a variant, the processing module MT instructs its traffic router R1 to integrate into at least certain of the uplink traffic frames signature data that represents the corresponding uplink copies. This insertion is preferably effected at the level of the compression/decompression module MCD1 of the traffic router R1. Here "signature data" means one or more characteristic bits for establishing a one-to-one relationship with an uplink copy.

In this case, the processing module MT detects the downlink copies by searching their data for signature data that represents stored uplink copies.

In case of detection in a selected time interval of a selected number of downlink copies including signature data representing stored uplink copies, the processing module MT instructs its traffic router R1, more precisely its routing module MR, to insert locally into frames going to the downlink second channel CD2 the useful data that is contained in the traffic frames carried on the uplink first traffic channel CM1 subsequent to the local routing instruction and to suspend the transmission to the MSC of at least the useful data fields relating to the call considered.

The signature data may be integrated into uplink frames by substituting it for non-payload data contained in their useful (payload) data field or by adding it to the useful data that is contained in their useful data field (if they are not all used).

This integration may be effected in the traffic frames, regardless of their type, or only in voice traffic frames (i.e. frames containing speech) during the detection period or only in silence traffic frames or invalid traffic frames that are interleaved between the voice frames.

There are at least three different approaches to constituting the frames that are routed locally and that comprise the useful data.

The first approach requires the traffic router R1 to comprise, as shown in figure 2, a frame compression/decompression module MCD1 using a TRAU frame compression/decompression technique consisting in, on the one hand, extracting from the TRAU frames the control bits that they contain in order to transmit them in a compacted form excluding the redundant or non-significant bits and, on the other hand, extracting the useful (payload) data from these TRAU frames or transmitting the useful data of the TRAU frames only when they are valid frames and when no local routing instruction is received from the associated device D. In this compression mode the useful data of the frames corresponding to periods of silence or invalid frames is not transmitted, so as to contribute to reducing the consumption of satellite capacity.

This first approach also requires the processing module MT to effect the operations described hereinafter following a successful detection phase.

First of all, the processing module MT makes an uplink copy of each traffic frame that is carried on the uplink first traffic channel CM1 (having been the subject of the successful detection), subsequent to the local routing instruction. It then stores for a selected period each uplink copy, for example in the subportion dedicated to the uplink first traffic channel CM1 in the first memory MM.

When the processing module MT has made the copy of a traffic frame carried on the uplink first traffic channel CM1, it extracts from that traffic frame the useful data that it contains in order to compare it to the useful data carried by any new active downlink channel.

If and for as long as the result of the detection is negative (no identity between useful data or corresponding signature data and uplink copies), the device D configures the routing module MR so that it transmits to the module MCD1 the TRAU frames received at its input, for the communication circuit considered. If the result of the comparison is positive (identity of the useful data or presence of signatures corresponding to uplink copies), the device D supplies a routing instruction to the module MCD1 so that it ceases to transmit useful data fields to the gateway G2 for the uplink channel that was the subject of the detection and to the module MR so that the useful data stored in the first (uplink) memory MM is returned to the downlink circuit that has been correlated with the uplink circuit considered, substituted for useful data carried by the frames delivered by the frame compression/decompression module MCD1.

For each TRAU frame coming from the module MR, the frame compression/decompression module MCD1 is responsible for compressing the TRAU frames before they are transmitted over the satellite link. The control bits are then transmitted in a compacted form (only the significant and non-redundant bits are transmitted), and the useful data carried by the silence TRAU frames or TRAU frames declared invalid is not transmitted. Thus, once a silence or invalid frame has been compressed, it comprises only a few bits.

The compressed frames delivered by the frame compression/decompression module MCD1 are transmitted to the call switch MSC via the gateway G1, the satellite SAT, the second gateway G2, the second router R2 and the transcoder TC.

As will emerge hereinafter, the frame compression/decompression module MCD1 is also responsible for decompressing each compressed frame that it receives from the gateway G2, reconstituting the compressed frames by restoring the control bits of its header and inserting filler bits in place of the useful data for the silence frames or the invalid frames.

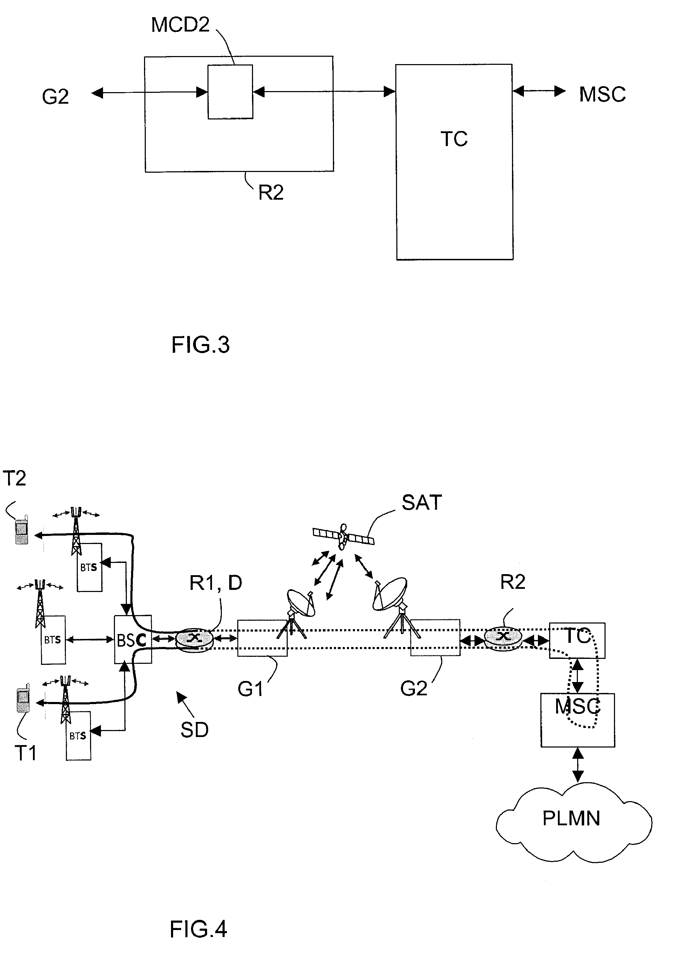

At the other end of the link, as shown in figure 3, the router R2 also comprises a frame compression/decompression module MCD2 responsible for the operation that is the converse of that carried out by the module MCD1, reconstituting the compressed uplink frames by restoring the control bits of their header and inserting filler bits in place of the useful data for the silence frames or the invalid frames.

If the call considered is processed in TFO mode, the transcoder TC retransmits the frame decompressed by the module MCD2 in transparent mode, without degrading it, to the call switch MSC. At this stage the structure of the original TRAU frame has been reconstituted, apart from the section dedicated to useful data that now consists of only a few filler bits in three cases: silence frame, invalid frame, or frame routed locally at the remote site end; in other cases, the useful data is significant and therefore transmitted. The call switch MSC retransmits identically the data received in the decompressed frame to the transcoder TC which also transmits it in transparent mode, without degrading it, to the second router R2. The frame compression/decompression module MCD2 of the second router R2 handles the compression of the downlink TRAU frames received in this way: compression of the control bits and of the useful data field according to the type of frame received (speech, silence or invalid). The frames compressed in this way are transmitted to the remote site SD via the second gateway G2, the satellite SAT and the first gateway G1.

The round trip of a compressed frame from the remote site SD to itself via the call switch MSC is shown by a dotted line in figure 4.

When the compressed frame reaches the router R1, the frame compression/decompression module MCD1 carries out the operation that is the converse of that carried out by the module MCD2, reconstituting the compressed downlink frames by restoring the control bits of their header and inserting filler bits in place of the useful data for the silence frames or the invalid frames.

For a local call, the processing module MT extracts from the first memory MM the useful data contained in the uplink copy that corresponds to the reconstituted frame and integrates into the reconstituted frame the extracted useful data, in order to reconstitute the initial traffic frame in so far as the useful data is concerned.

The local routing of the useful data is indicated by a continuous line in figure 4.

It will be noted that at least three techniques may be envisaged for determining in the first memory MM the uplink copy that contains the useful data to be routed.

A first technique consists in comparing the useful data of each decompressed downlink frame to the useful data of the uplink copies stored in the subportion dedicated to the uplink first traffic channel CM1 in the first memory MM.

A second technique requires the use of a first memory MM whose subportions are of FIFO ("First In First Out") type. In this case, the uplink copy at the head of the queue is that whose content must be compared successively to the downlink copies and substituted for the useful data field of the reconstituted frame.

A third technique requires a knowledge of the round trip time for a compressed frame to go from the traffic router R1 to the call switch MSC and then from the latter to the traffic router R1.

This round trip time may be known in advance and considered as a constant parameter in the processing module MT.

Alternatively, the round trip time may be determined regularly, or systematically, by means of the compressed frames. To this end, the processing module MT may be responsible for inserting into at least certain traffic frames carried on an uplink first traffic channel CM1, possibly only into those that are compressed, and preferably before compression, a time marker, such as a counter or a pseudo-random sequence generator, for example. Thus, when the processing module MT receives a decompressed frame again, it compares its reception time period to the time period that is represented by the time marker that it contains, and deduces from this its complete round trip time.

The uplink copies must also be stored in corresponding relationship to a time period. Accordingly, knowing the round trip time and the current time period, the processing module MT can determine which uplink copy contains the useful data that must be substituted for that contained in the useful data field of the reconstituted frame to be routed locally.

It will be noted that the round trip time fixes the time for which the uplink codes are stored in the first memory MM.

The second approach requires the processing module MT to extract each traffic frame from the uplink first traffic channel CM1 (the subject of the successful detection), subsequent to the local routing instruction. It then stores for a selected period each extracted traffic frame, for example in the subportion dedicated to the uplink first traffic channel CM1 in the first memory MM.

Thus, each time that the selected storage time of a stored traffic frame ends, the processing module MT extracts that traffic frame from the first memory MM and instructs the traffic router R1, more precisely its routing module, to route it locally and directly to the downlink second channel CD2. The frames that are then delivered by the routing module MR to the compression/decompression module MCD1 are frames declared as invalid, which suspends the transmission of the useful data field to the gateway G2.

The time of storage of a traffic frame in the first memory MM may be fixed. For example, it may be equal to the round trip time of a traffic frame from the remote site SD to itself, via the call switch MSC. As indicated hereinabove, this round trip time may be known in advance and considered as a constant parameter in the processing module MT.

Alternatively, the round trip time may be determined regularly by the processing module MT inserting a time marker in certain uplink traffic frames and then comparing the time period of those traffic frames returning to the traffic router R1 to the time period that is represented by the time marker that they contain. In this case, the time of storage of a traffic frame in the first memory MM is fixed by the value of the latest estimate of the round trip time.

However, the storage time may equally well be fixed arbitrarily. Thus it may be made less than the round trip time, for example.

The third approach requires the processing module MT to extract each traffic frame from the uplink first traffic channel CM1 (having been the subject of the successful detection), subsequent to the local routing instruction, and then to instruct the traffic router R1, more precisely its routing module, to route it locally and directly to the downlink second channel CD2. This local routing is effected without prior storage and without prior transmission of a compressed frame to the call switch MSC.

However it is used, the processing module MT may be adapted to process only traffic frames that contain speech data. In fact, the silence frames generally include ambiguous contents.

Moreover, and as shown in figure 2 by way of nonlimiting example, it may be envisaged that the routing device D comprise a filtering module MF responsible for analyzing the signaling messages that represent traffic frames carried on the downlink traffic channels. This in fact makes it possible to determine from among all of the downlink traffic channels those which concern a new call or a call transfer (or handover) procedure, and which are therefore liable to carry traffic frames identical to those carried by an uplink first traffic channel CM1 or including signatures corresponding to the uplink copies of those carried by an uplink first traffic channel CM1.

The filtering module MF can therefore signal to the processing module MT the downlink traffic channels that it has selected. This selection enables the processing module MT, during the detection phase, to effect downlink copies only of traffic frames that are carried by the selected downlink traffic channels. Thus the number of downlink copies to be effected and to be stored in the second memory MD may be significantly reduced, and the time necessary for each comparison may also be significantly reduced.

A filtering variant may be envisaged when the traffic frames include a communication identifier of the calling or called terminal. In this case, the filtering module MF analyzes in the routing module MR the headers of the traffic frames that are carried on the downlink traffic channels. It can thus select each downlink traffic channel that includes a communication identifier identical to that which is contained in the uplink copies stored in a subportion dedicated to an uplink first traffic channel CM1 in the first memory MM.

The filtering module MF can therefore signal to the processing module MT the downlink traffic channels that it has selected. This selection enables the processing module MT, during the detection phase, to effect only downlink copies of the traffic frames that are carried by the selected downlink traffic channels. Thus the number of downlink copies to be effected and to be stored in the second memory MD may be significantly reduced, and the time necessary for each comparison may also be significantly reduced.

The routing device D according to the invention, and in particular its processing module MT and its memories MM and MD, frame compression/decompression module MCD1 and filtering module MF, if any, may be produced in the form of electronic circuits, software (or electronic data processing) modules, or a combination of circuits and software.

The invention enables a saving in the satellite capacity used from around 10% to around 40% as a function of the proportion of local calls, over and above the saving linked to the compression of silence frames, invalid frames and control bits.

The invention is not limited to the routing device and router embodiments described hereinabove by way of example only, and encompasses all variants that the person skilled in the art might envisage within the scope of the following claims.

## Claims

1. Device (D) for routing traffic between communication terminals (T1, T2), for a traffic router (R1) connected, via a transmission network portion, to a radio communication network comprising a call switch (MSC), **characterized in that** it comprises processing means (MT) adapted, in case of setting up an uplink first traffic channel between a calling terminal (T1) and said call switch (MSC) and a downlink second traffic channel between said call switch (MSC) and a terminal (T2) called by said calling terminal (T1) and supporting the same type of codec, i) to store for a selected period uplink and downlink copies of successive traffic frames, respectively carried on said uplink first traffic channel and on at least one downlink traffic channel, then ii) to detect among said stored downlink copies those including data related to stored uplink copies, and iii) in case of detection in a selected time interval of a selected number of such downlink copies, to instruct said traffic router (R1) to insert locally into frames going to the downlink second channel the useful data contained in the traffic frames carried on said uplink first traffic channel subsequent to said local routing instruction, and to suspend the transmission to said call switch (MSC) of at least the useful data fields relating to the call considered.

2. Device according to claim 1, **characterized in that** said processing means (MT) are adapted to effect their detection by comparing with each other the useful data contained in the useful data fields of said stored uplink and downlink copies and, in case of detection in a selected time interval of a selected number of uplink copies including useful data fields identical to those of stored downlink copies, to instruct said traffic router (R1) to insert locally in frames going to the downlink second channel the useful data contained in the traffic frames carried on said uplink first traffic channel subsequent to said local routing instruction, and to suspend the transmission to said call switch (MSC) of at least the useful data fields relating to the call considered.

3. Device according to claim 1, **characterized in that** said processing means (MT) are adapted to instruct said traffic router (R1) to integrate into at least certain of said uplink traffic frames signature data representing the corresponding uplink copies and to detect said downlink copies by searching their data for signature data representing stored uplink copies and, in case of detection in a selected time interval of a selected number of downlink copies including signature data representing stored uplink copies, to instruct said traffic router (R1) to insert locally into frames going to the downlink second channel the useful data contained in the traffic frames carried on said uplink first traffic channel subsequent to said local routing instruction and to suspend the transmission to said call switch (MSC) of at least the useful data fields relating to the call considered.

4. Device according to claim 3, **characterized in that** said processing means (MT) are adapted to instruct said traffic router (R1) to integrate said signature data into said uplink traffic frames by substituting it for non-useful data contained in their useful data field and adding it to the useful data contained in their useful data field.

5. Device according to either of claims 3 and 4, **characterized in that** said processing means (MT) are adapted to instruct said traffic router (R1) to integrate signature data into the voice traffic frames during the detection period.

6. Device according to either of claims 3 and 4, **characterized in that** said processing means (MT) are adapted to instruct said traffic router (R1) to integrate signature data into the silence or invalid traffic frames.

7. Device according to any one of claims 1 to 6, **characterized in that** it comprises frame compression/decompression means (MCD1) adapted to implement a frame control bit compression/decompression technique and said processing means (MT) are adapted i) to store for a selected period an uplink copy of each traffic frame carried on said uplink first traffic channel subsequent to said instruction, ii) then to extract from said copied traffic frame the useful data that it contains to constitute a reduced frame, iii) then to instruct said frame compression/decompression means (MCD1) to extract from said copied traffic frame the control bits that it contains in order to group at least certain of said extracted control bits in a compressed frame intended for said call switch (MSC), and iv), in case of reconstitution of a downlink frame by said frame compression/decompression means (MCD1) by means of decompression, to instruct said traffic router (R1) to insert in said reconstituted frame the useful data from the corresponding stored uplink copy in order to constitute a traffic frame in which the control bits are those of said reconstituted downlink frame and the useful data field comprises said useful data from the uplink copy.

8. Device according to claim 7, **characterized in that** said frame compression/decompression means (MCD1) are adapted to compress said extracted control bits by elimination of redundant or non-significant bits, and then to group the remaining control bits in a compressed frame, and to decompress each compressed downlink frame, returning the significant control bits to their original location, so as to deliver reconstituted downlink frames.

9. Device according to any one of claims 1 to 6, **characterized in that** said processing means (MT) are adapted to store for a selected period each traffic frame carried on said uplink first traffic channel subsequent to said local routing instruction and to instruct said traffic router (R1) to route locally and directly each stored frame to the downlink second channel once its selected storage period has ended, without transmitting it beforehand to said call switch (MSC).

10. Device according to any one of claims 1 to 9, **characterized in that** said processing means (MT) are adapted to insert a time marker in at least certain of said traffic frames carried by said uplink first traffic channel and to compare the reception time period of a traffic frame carried on said downlink second traffic channel to the time period represented by the time marker that it contains in order to determine the complete round trip time of said traffic frame and then to select said uplink copy storage period as a function of said complete round trip time that has been determined.

11. Device according to any one of claims 1 to 6, **characterized in that** said processing means (MT) are adapted to instruct said traffic router (R1) to route locally and directly to the downlink second channel the traffic frames carried on said uplink first traffic channel subsequent to said local routing instruction, without transmitting them beforehand to said call switch (MSC).

12. Device according to any one of claims 1 to 11, **characterized in that** said processing means (MT) are adapted to process only traffic frames containing speech data.

13. Device according to any one of claims 1 to 12, **characterized in that** it comprises filtering means (MF) adapted to analyze signaling messages representing traffic frames carried on the downlink traffic channels to determine from among those downlink traffic channels those concerning a new call or a call transfer procedure, and then to designate the selected downlink traffic channels to said processing means (MT), and said processing means (MT) are adapted to store temporarily only downlink copies of traffic frames carried by said selected downlink traffic channels, with a view to comparing them to said uplink copies.

14. Device according to any one of claims 1 to 12, **characterized in that** it comprises filtering means (MF) adapted, in the presence of traffic frames including a communication identifier for a calling terminal (T1) or a called terminal (T2), to analyze the headers of the traffic frames carried on the downlink traffic channels to select each downlink traffic channel carrying frames including a communication identifier identical to that contained in the stored uplink copies, and then to designate the selected downlink traffic channels to said processing means (MT), and said processing means (MT) are adapted to store temporarily only downlink copies of traffic frames carried by said selected downlink traffic channels, with a view to comparing them to said corresponding uplink copies.

15. Traffic router (R1) for a radio communication network, including at least one transmission network portion and one call switch (MSC), **characterized in that** it comprises at least one routing device (D) according to any one of the preceding claims.
